# EUROPEAN PATENT SPECIFICATION

(11) **EP 3 175 717 B1**
(45) Date of publication and mention of the grant of the patent: **08.05.2019**
(21) Application number: 16192785.0
(22) Date of filing: 07.10.2016
(51) Int. Cl.: A23L 25/00, A23C 11/10, C11B 5/00, A23D 7/005, A23L 29/238, A23L 29/269

(54) **ALMOND-BASED FOOD PRODUCTS WITH IMPROVED TASTE CHARACTERISTICS**
MANDELBASIERTE LEBENSMITTELPRODUKTE MIT VERBESSERTEN GESCHMACKSEIGENSCHAFTEN
PRODUITS ALIMENTAIRES À BASE D'AMANDE AVEC CARACTÉRISTIQUES DE GOÛT AMÉLIORÉES

(30) Priority: 04.12.2015 US 201514960033
(43) Date of publication of application: 07.06.2017
(73) Proprietor: WhiteWave Services, Inc., Denver CO 80202 (US)
(72) Inventor: Bringe, Neal Allan, Elizabeth, CO Colorado 80107 (US)
(74) Representative: Barker Brettell LLP

(56) References cited:
- EP-A1- 2 165 712
- EP-A1- 2 294 927
- WO-A1-99/39591
- US-A1- 2004 170 728
- MUHAMMAD NADEEM ET AL: "Enhancement of the Oxidative Stability of Whey Butter through Almond ( Prunus dulcis ) Peel Extract", JOURNAL OF FOOD PROCESSING AND PRESERVATION, vol. 39, no. 6, 9 May 2014 (2014-05-09), pages 591-598, XP55352418, TRUMBULL, CT, US ISSN: 0145-8892, DOI: 10.1111/jfpp.12265

## Description

### TECHNICAL FIELD

Particular embodiments relate generally to almond-based food products, and more specifically to almond-based food products having improved taste characteristics from the inclusion of almond skin extract.

### BACKGROUND

Almond-based food products may be made by mixing almond butter with other ingredients, such as water, flavors, vitamins, minerals, salts, sweeteners, stabilizers, emulsifiers, and/or other ingredients. However, oxidation of almond butter lipids may create off-flavors during processing and/or storage of the almond-based food products, which may be undesirable to consumers.

US 2004/170728 A1 discloses a composition and method according to the precharacterizing portion of claims 1 and 5. US 2004/170728 A1 discloses methods for retarding lipid oxidation in food products and the use of antioxidant compositions containing effective amounts of siderophores and organic acids to retard lipid oxidation in food products. Food products containing such lipid oxidation-retarding compositions are also disclosed.

EP 2294927 A1 discloses a method for making non-dairy, nut-based milk. The method includes mixing water and nut butter. A dry blend is added that includes one or more hydrocolloids selected from the group consisting of: gellan gum, guar gum, locust bean gum, and xanthan gum. The dry blend further includes one or more salts. The non-dairy, nut-based milk is substantially free of soy or soy-derived ingredients.

### SUMMARY OF EXAMPLE EMBODIMENTS

According to a first aspect of the invention, there is provided a composition as defined in claim 1. The almond skin extract may comprise 35% polyphenols.

According to a second aspect of the invention, there is provided a method as defined in claim 5. The method includes adding water, almond butter, an ingredient blend, and almond skin extract to a mixer, and mixing the ingredients, using the mixer, to yield a mixture having the ingredients dispersed substantially evenly throughout. The almond skin extract may comprise 35% polyphenols, and the ingredient blend comprises one or more salts, lecithin, and one or more hydrocolloids selected from the group consisting of gellan gum, guar gum, locust bean gum, and xanthan gum.

According to a non-claimed aspect, a product is made according to the method comprising adding water, almond butter, an ingredient blend, and almond skin extract to a mixer, and mixing the ingredients, using the mixer, to yield a mixture having the ingredients dispersed substantially evenly throughout. The almond skin extract comprises approximately 35% polyphenols, and the ingredient blend comprises one or more salts, lecithin, and one or more hydrocolloids selected from the group consisting of gellan gum, guar gum, locust bean gum, and xanthan gum.

Technical advantages of particular embodiments of the present disclosure include reducing lipid oxidation in almond-based food products, which may lead to improved taste characteristics. Other technical advantages of the present disclosure will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present invention and for further features and advantages thereof, reference is now made to the following description taken in conjunction with the accompanying drawings, in which:
FIGURE 1 illustrates an example block diagram of a batching system for producing an almond-based food product in accordance with embodiments of the present disclosure; and
FIGURE 2 illustrates an example method for making an almond-based food product in accordance with embodiments of the present disclosure.

### DETAILED DESCRIPTION

Almond-based food products may be made by mixing almond butter with other ingredients, such as water, flavors, vitamins, minerals, salts, sweeteners, stabilizers, emulsifiers, and/or other ingredients. However, oxidation of almond butter lipids may create off-flavors during processing and/or storage of the almond-based food products, which may be undesirable to consumers. Previous methods of reducing lipid oxidation in almond butter have been unsuccessful. For example, the addition of antioxidants, such as spearmint and rosemary, to almond milk have shown to have little effect on levels of hexanal (a key indicator of lipid oxidation levels) in the almond milk.

Accordingly, aspects of the present disclosure include the addition of almond skin extract to almond-based food products during manufacture in order to reduce lipid oxidation, creating food products with improved taste characteristics. In particular, the addition almond skin extract having approximately 35% polyphenols may reduce hexanal levels in almond-based food products by approximately 40%. Almond skin extract may be used in aspects of the present disclosure rather than almond skins, as almond skins added during manufacture (as opposed to almond skin extract) may enhance oxidation and leave visible skin pieces in the resulting food product in addition to undesirably darkening the food product. In particular embodiments, the almond skin extract may be added during manufacture such that the extract comprises less than 0.0010% of the resulting composition (e.g., 0.0008% or 0.0004% of the composition).

In addition to almond skin extract, aspects of the present disclosure may include the addition of ascorbic acid to almond-based food products during manufacture along with almond skin extract. Ascorbic acid alone may cause almond-based food products such as almond milks to be less stable. However, this effect may be countered by polyphenols in almond skin extract, and may create a synergistic effect in further lowering hexanal levels in almond-based food products. For instance, reaction products from Maillard browning reactions (resulting from the oxidation of ascorbic acid to form reactive threose) may interact with almond proteins causing them to become more insoluble. Almond skin extract polyphenols may inhibit the Maillard browning reactions, so the combination of ascorbic acid and almond skin extract may be more stable against separation. Furthermore, the addition of ascorbic acid and almond skin extract to almond-based food products together may produce food products with more whiteness, which may be desirable in almond-based food products such as almond milk. In particular embodiments, the ascorbic acid may be added during manufacture such that the ascorbic acid comprises less than 0.02% of the resulting composition (e.g., 0.015% of the composition).

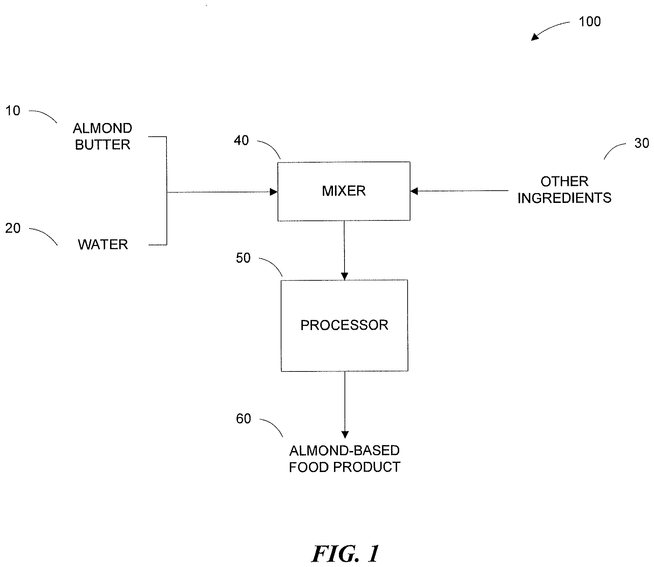

Embodiments of the present invention and its advantages are best understood by referring to FIGURES 1-2 of the drawings, like numerals being used for like and corresponding parts of the various drawings.

FIGURE 1 illustrates an example block diagram of a system 100 for producing an almond-based food product in accordance with embodiments of the present disclosure. System 100 may produce almond-based food products, such as almond milk, having lower hexanal levels and thus improved taste characteristics. The lower hexanal levels may be due to the inclusion of almond skin extract, or to the inclusion of almond skin extract and ascorbic acid together. TABLES 1 through 4 below include example formulas illustrating particular ingredients that may mixed by system 100 of FIGURE 1 to make an almond-based food product, such as almond milk, according to certain embodiments of the present disclosure.

System 100 may include a mixer 40 and a processor 50. To create almond-based food product 60, mixer 40 may mix almond butter 10 and water 20 together along with other ingredients 30. Mixer 40 may comprise any appropriate container suitable to receive, mix, and/or discharge a combination of almond butter 10, water 20, and other ingredients 30. In particular embodiments, mixer 40 may comprise a stainless steel chamber of any suitable size. For example, mixer 40 may be sized to mix almond butter 10, water 20, and other ingredients 30 in large batches that may later be divided into smaller sizes suitable for sales to consumers, or mixer 40 may be sized to mix smaller, individual-sized portions.

Almond butter 10 may be any suitable almond butter, and may be made by grinding almonds. In certain embodiments, almond butter 10 may be a commercially available almond butter such as balanced almond butter from JOHN B SANFILIPPO & SON, INC. Other ingredients 30 may include any suitable ingredients for use in making almond-based food product beyond almond butter 10 and water 20. These include one or more hydrocolloids chosen from gellan gum, guar gum, locust bean gum, and xanthan gum, one or more salts (e.g., sea salt (*e.g.*, sodium chloride and lecithin. Other ingredients which may be included are a potassium phosphate (*e.g.*, monopotassium phosphate (KH2PO4), dipotassium phosphate (K2HPO4), tripotassium phosphate (K3PO4) etc.), a sodium phosphate (*e.g.*, disodium phosphate (Na2HPO4)), a calcium phosphate (*e*.*g*., tricalcium phosphate Ca3(PO4)2), and/or any other suitable emulsifying, flavoring, stabilizing, and/or buffering agent or combination of agents, and health-related supplements such as calcium carbonate (CaCO3), vitamin A, vitamin B2, vitamin B12, vitamin D, vitamin E, zinc, fiber, protein, potassium, phosphorus, fatty acids, (e.g., omega 3, omega 6, etc.), oligosaccharide.

As disclosed herein, other ingredients 30 include almond skin extract and optionally ascorbic acid. The inclusion of these ingredients may allow for lower levels of hexanal in the resulting almond-based food product 60, which may provide improved taste characteristics in the food product 60. In certain embodiments, the almond skin extract may comprise 35% polyphenols. The almond skin extract may comprise less than 0.001% of the composition of almond-based food product 60, such as between 0.0004% and 0.0008% of the composition. The ascorbic acid may comprise less than 0.020% of the composition of almond-based food product 60, such as 0.015% of the composition.

Mixer 40 may receive almond butter 10, water 20, and other ingredients 30 through one or more different inlets. For example, a combination of almond butter 10 and water 20 may be added to a mixing chamber of mixer 40 through one or more nozzle and hose inlets, and other ingredients 30 may be added through one or more openings in mixer 40. Mixer 40 may include one or more means for blending, mixing, combining, stirring, and/or agitating the combination of almond butter 10, water 20, and other ingredients 30. For example, mixer 40 may include mechanical agitators, pressure jets, or other suitable mixing devices, whether located within mixer 40 or external to mixer 40. Alternatively, mixer 40 may allow for stirring or mixing by hand. In some embodiments, mixer 40 may be chilled to prevent microbial growth and degradation of the ingredients therein during mixing. Accordingly, mixer 40 may include a jacketed or insulated tank to maintain appropriate temperatures. Mixer 40 may also include one or more discharge outlets connected to other components of system 100, such as processor 50. For example, mixer 40 may include one or more discharge outlets connected to hoses or tubes, which may carry a combination of almond butter 10, water 20, and other ingredients 30 mixed by mixer 40 to processor 50, which may comprise one or more processing components.

In operation, an operator of system 100 selects appropriate amounts of almond butter 10, water 20, and other ingredients 30 for the desired finished food product. Once appropriate amounts of the ingredients are selected, an operator introduces selected ingredients into mixer 40. Ingredients may be added serially (i.e., one at time), collectively (i.e., all ingredients are added substantially at once), or in a combination (i.e., certain subsets of ingredients are pre-combined, and the combination is added serially with other ingredients or ingredient combinations). After an appropriate mixing time, the mixture of almond butter 10, water 20, and other ingredients 30 may be discharged into processor 50 manually or through one or more nozzles, hoses, spigots, or other appropriate discharging outlet.

Processor 50 may comprise one or more components for further processing the mixture discharged from mixer 40. As an example, in some embodiments, processor 50 may include means for pasteurizing the mixture (e.g., injectors for direct steam injection) to reduce the number of undesirable microorganisms and prolong shelf life. Pasteurization may refer to heating the product to a temperature (e.g., 160 °F to 295 °F (71 °C to 146 °C)) and holding it at the temperature for a period of time (e.g., 1 to 30 seconds) to reduce the number of viable pathogenic micro-organisms in the product. Examples of pasteurization techniques include high temperature short time pasteurization (HTST), ultra pasteurization (UP), ultra high temperature pasteurization (UHT), and high pressure pasteurization (HPP). In some embodiments, processor 50 may comprise a heat exchanger, such that the mixture is pasteurized and then processed through the heat exchanger to cool the mixture. In certain embodiments, pasteurizing the mixture may include UHT pasteurization wherein the mixture is heated to a temperature between approximately 280 °F to 306 °F (138 °C to 152 °C) for a period of 1 to 10 seconds.

As another example, processor 50 may include a homogenizer or other means for reducing particle size so that particle distribution may be maintained and mouthfeel may be improved. In certain embodiments, the mixture may be processed through a homogenizer after pasteurization.

In particular embodiments, processor 50 may include a vacuum cooling module that performs vacuum cooling on the mixture to remove volatiles following pasteurization. In some embodiments, the vacuum cooling may be performed at a temperature of approximately 170 °F to 198 °F (77 °C to 92 °C) for a period of 1 to 5 seconds.

Once all processing steps are performed by processor 50, the resulting almond-based food product 60 is discharged therefrom. In some embodiments, the product 60 may be directed from processor 50 to packaging, bottling, or filling components suitable to ready product 60 for commercial sale or use. For example, packaging components may deposit an amount of the almond-based food product 60 into one or more bottles, jars, cans, cartons, and/or any other appropriate container.

Modifications, additions, or omissions may be made to system 100 without departing from the scope of the invention. For example, although system 100 of FIGURE 1 includes a particular number and arrangement of components, system 100 may include fewer or additional components, or may exclude certain of the illustrated components in certain embodiments.

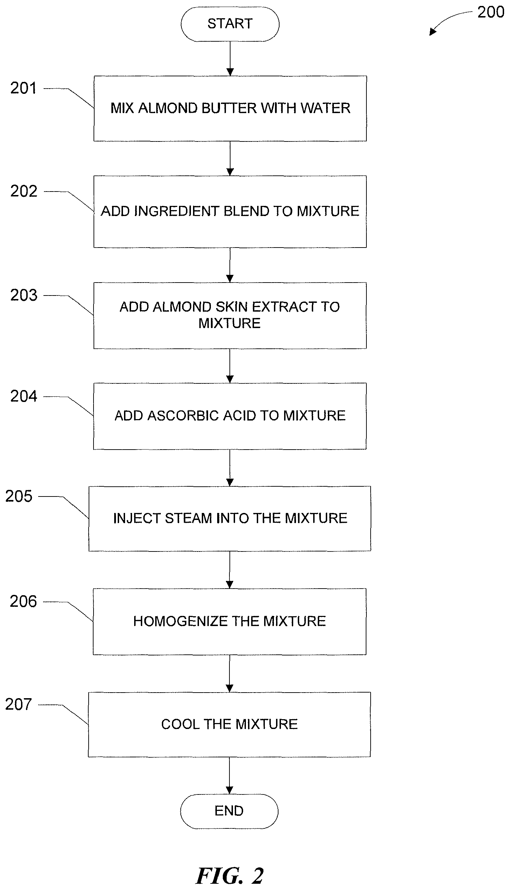

FIGURE 2 illustrates an example method 200 for making an almond-based food product in accordance with embodiments of the present disclosure. The method begins at step 201, where almond butter and water are mixed to create a base for the resulting almond-based food product. In particular embodiments, the process of mixing the almond butter with water may include cycling the mixture of water and almond butter between components of mixer 40 of system 100, such as a blend tank and a liquifier. For instance, the water may be metered into the liquifier first, followed by the almond butter. In some cases, however, at least some of the water and almond butter may be added simultaneously to the liquifier. In certain embodiments, the water may comprise approximately 70% to 99% of the total weight or volume of the mixture after all ingredients are added.

At step 202, an ingredient blend is added to the mixture of almond butter and water. In a particular embodiments, the ingredient blend is added to the mixer 40 of system 100 via a 1 liquifier. According to various embodiments, the ingredient blend may be a powder mixture that includes lecithin, one or more salts, and one or more hydrocolloids as defined in claims 1 or 5.

In particular embodiments, the lecithin used in the ingredient blend may be entirely free of soy or soy-derived ingredients. For example, one or more soy-free lecithins, including a sunflower-based lecithin, may be used. Using one or more substantially soy-free lecithins may, in certain embodiments, enable increasing the percentage content of a more neutral-tasting lecithin beyond thresholds for soy-derived lecithins at which a percentage increase in the soy-derived lecithin may negatively affect taste and/or mouth feel. Although various embodiments may add a lecithin that is substantially or entirely free of soy or soy-derived ingredients, alternative embodiments may use one or more alterative lecithins or no lecithin. Embodiments that are substantially or entirely free of soy or soy-derived ingredients may enable production of a non-dairy milk that may be consumed, for example, by those who do not consume dairy products or soy products for reasons related to digestion, allergies, taste, and/or other reasons. Additionally, unlike non-dairy milk products that contain a lecithin derived at least partially from genetically modified soy beans or some other genetically modified organism (GMO), particular embodiments may use one or more lecithins that are not derived from genetically modified organisms. Other embodiments may be substantially or entirely free of lecithin. In embodiments including one or more non-soy or non-GMO-based lecithins in powder form, the lecithin(s) may alternatively be included within the ingredient blend. In particular embodiments, however, the lecithin may be in liquid form and may have a high enough viscosity to justify adding the lecithin(s) in a separate step, which in some cases may enhance dispersion.

In particular embodiments, the one or more salts of the ingredient blend may include one or more of the following: sea salt (*e*.*g*., sodium chloride), a potassium phosphate (*e*.*g*., monopotassium phosphate (KH2PO4), dipotassium phosphate (K2HPO4), tripotassium phosphate (K3PO4) etc.), a sodium phosphate (*e*.*g*., disodium phosphate (Na2HPO4)), a calcium phosphate (*e*.*g*., tricalcium phosphate Ca3(PO4)2), and/or any other suitable emulsifying, flavoring, stabilizing, and/or buffering agent or combination of agents. As shown in several example formulations below, particular salt combinations may improve dispersion of the non-soy based protein, provide enhanced product stability, and round out the flavor profile. In certain embodiments, the one or more salt agents of various ingredient blends may be substantially free of buffering salts.

The hydrocolloids of the ingredient blend include one or more of the following: gellan gum, xanthan gum, locust bean gum (LBG) and guar gum, optionally together with any other hydrocolloid. In some cases, the particular hydrocolloid or combination of hydrocolloids may be chosen for properties other than, or in addition to, stabilization. For example, some hydrocolloid(s) may contribute to optimal suspension, mouth feel, or some other desirable feature. As shown in several example formulations below, the hydrocolloids may include gellan gum and locust bean gum pre-blendcd at approximately a 50/50 ratio by weight or volume.

In some embodiments, one or more health-related supplements may optionally be added to the ingredient blend. The health-related supplements of the ingredient blend may include one or more of the following: calcium carbonate (CaCO3), vitamin A, vitamin B2, vitamin B12, vitamin D, vitamin E, zinc, fiber, protein, potassium, phosphorus, fatty acids, (e.g., omega 3, omega 6, etc.), oligosaccharide, and/or any other suitable health-related supplement. In various embodiments, the one or more health-related supplements may be selected based at least in part on a neutral-taste quality that may have little or no impact on the overall taste of the product. In particular embodiments, the addition of the salts of potassium and phosphate ions may provide both a source of both potassium and phosphorus. In some embodiments, fiber may be provided by the addition of dextrin (*e*.*g*., Nutriose), polydextrose, and/or some other suitable dietary or non-dietary fiber source.

In some embodiments, one or more protein-based supplements may optionally be added to the ingredient blend. In particular embodiments, the one or more protein-based supplements comprise a protein that is substantially free of soy-protein, such as, for example yellow pea protein, potato protein, and/or any other suitable non-soy protein-based supplement. In another embodiment, a soy-derived protein may be added, which in some cases may not only provide an additional source of protein but may also be used in place of a lecithin, such that no lecithin is added to the product apart from the what may naturally appear within the soy-derived protein. In other embodiments, a soy-derived protein may be added in combination with a lecithin.

Although particular example embodiments are described as having ingredient blends that include one or more of the above, the ingredient blend added at step 202 may include various alternative or additional ingredients. Additionally, the ingredient blend described herein may be in dry powder or liquid form.

At steps 203 and 204 almond skin extract and ascorbic acid, respectively, are added to the mixture of almond butter and water. In certain embodiments, the almond skin extract may comprise 35% polyphenols. The almond skin extract may comprise less than 0.001% of the composition of almond-based food product 60, such as between 0.0004% and 0.0008% of the composition. The ascorbic acid may comprise less than 0.020% of the composition of almond-based food product 60, such as 0.015% of the composition.

Once all ingredients have been added to the mixture, the combined mixture may be allowed to blend for three to ten minutes (e.g., approximately five minutes) or any other suitable duration of time. According to one embodiment, the blending may include circulating the product between a liquifier and a blend tank. Additionally, the blending may further include a low-speed agitation for an additional five to fifteen minutes *(e*.*g*., ten minutes) or any other suitable duration of time.

At step 205, the product is processed through a direct steam injection processor. In particular embodiments, the product may be pumped through a pre-heater, which may raise the product temperature from about 35 °F to 70 °F (1.7 °C to 21 °C) to within the range of 150 °F to 200 °F (66 °C to 93 °C) (e.g., 174 °F (79 °C)). The pre-heated product may then flow through stainless steel tubing, where steam may be directly injected into the product as it flows. The tubing may have a specified length based on the flow rate to achieve a product temperature within the range of 250 °F and 300 °F (121 °C to 149 °C) (*e.g.*, 284 °F (140 °C)). After processing through a direct steam injection processor, the product may be introduced to a flash chamber that removes substantially all of the steam that may have been added in step 205. Although direct heat is used in this example, indirect heat may be used *(e.g.*, heat transfer through indirect plates, tube-in-tube, tube-in-shelf, etc.).

At step 206, the product is homogenized. In particular embodiments, homogenization may be accomplished by passing the product under high pressure through a small orifice. For example, the product may be exposed to a maximum homogenization pressure of approximately 500 to 4000 pounds per square inch (psi) (35 Bar to 276 Bar) (e.g., 3000 psi (207 Bar)); however, any suitable maximum pressure may be used. In various embodiments, homogenization may be accomplished using two stages, each with a different pressure (e.g., approximately 2000 psi (138 Bar) at a second stage and approximately 500 psi (35 Bar) at a first stage). In an alternative embodiment, an ultrahigh homogenization pressure (UHP) may be used. For example, the product may be exposed to a maximum homogenization pressure of approximately 25,000 psi (1724 Bar). Exposing the product to UHP processing may, in some cases, provide stabilizing properties to the product in a manner similar to some hydrocolloids. Thus, particular embodiments using UHP processing may be substantially or entirely free of hydrocolloids.

At step 207, the product is cooled. The product may he cooled, for example, to a temperature within the range of approximately 32 °F to 45 °F (0 °C to 7 °C). Additionally, the product may be cooled by vacuum cooling techniques. The product may then be transferred to an aseptic tank cooler until it is called to a filler system for bottling or packaging in preparation for distribution. In a particular embodiment, the product may remain in the aseptic tank at a temperature of less than approximately 45 °F (7 °C) for a duration that is less than approximately 35 to 40 hours (e.g., 36 hours).

The steps illustrated in method 200 may be combined, modified, or omitted where appropriate, and additional steps may also be added to those shown. For example, although steps 203-204 are illustrated as being separate steps, steps 203-204 may be performed simultaneously. Furthermore, the steps may be performed in any suitable order without departing from the scope of the present disclosure. For example, although steps 202-204 are illustrate as being in a particular order, steps 202-204 may be performed in any suitable order.

Example formulations that may be used to produce almond-based food products, such as almond milk, according to various embodiments are described further below with reference to TABLES 1 through 4.

**TABLE 1**

| **Ingredient** | **% range** |
|---|---|
| Almond Butter | 1 - 5 |
| Water | 80 - 98 |
| Salts | 0.08 - 0.2 |
| Calcium Carbonate | 0.20 - 0.60 |
| Gellan Gum | 0.01 - 0.04 |
| Locust Bean Gum | 0.01 - 0.04 |
| Lecithin | 0.01 - 0.05 |
| Almond Skin Extract | 0.0003 - 0.0006 |

**TABLE 2**

| **Ingredient** | **% range** |
|---|---|
| Almond Butter | 1 - 5 |
| Water | 80 - 98 |
| Salts | 0.08 - 0.2 |
| Calcium Carbonate | 0.20 - 0.60 |
| Gellan Gum | 0.01 - 0.04 |
| Locust Bean Gum | 0.01 - 0.04 |
| Lecithin | 0.01 - 0.05 |
| Almond Skin Extract | 0.0006 - 0.0009 |

**TABLE 3**

| **Ingredient** | **% range** |
|---|---|
| Almond Butter | 1 - 5 |
| Water | 80 - 98 |
| Salts | 0.08 - 0.2 |
| Calcium Carbonate | 0.20 - 0.60 |
| Gellan Gum | 0.01 - 0.04 |
| Locust Bean Gum | 0.01 - 0.04 |
| Lecithin | 0.01 - 0.05 |
| Almond Skin Extract | 0.0003 - 0.0006 |
| Ascorbic Acid | 0.012 - 0.018 |

**TABLE 4**

| **Ingredient** | **% range** |
|---|---|
| Almond Butter | 1 - 5 |
| Water | 80 - 98 |
| Salts | 0.1 - 0.2 |
| Calcium Carbonate | 0.20 - 0.60 |
| Gellan Gum | 0.01 - 0.02 |
| Locust Bean Gum | 0-01 - 0.10 |
| Sunflower Lecithin | 0.01 - 0.05 |
| Almond Skin Extract | 0.0006 - 0.0009 |
| Ascorbic Acid | 0.012 - 0.018 |

Levels of hexanal, as used herein, may be measured using a headspace test method. In this method, a known concentration of internal standard (ethyl isobutyrate) may be added to a homogenous slurry of a sample (i.e., the almond-based food product) in a saturated salt solution. The solution may then be heated in a sealed container at approximately 80 °C for approximately 30 minutes to achieve thermodynamic equilibrium of the volatile components between the vapor and liquid phases. An aliquot of the vapor phase (i.e., the "headspace") may then be sampled with a gas-tight syringe and injected onto a gas chromatograph equipped with a flame ionization detector. A temperature gradient on the chromatographic column, from approximately 50 °C to approximately 220 °C, then yields a headspace profile of volatiles generated from the sample. Under the HSG mnemonic, the total peak area of the chromatogram, minus the internal standard area, is reported as a dimensionless total area count. Under the HEX mnemonic, hexanal was reported relative to the quantity of internal standard added.

A separation index, as used herein, may be measured by subjecting the samples of almond-based food products to gravitational forces under controlled conditions (e.g., time, temp, magnitude of gravitational force), simulating months of storage under normal gravity. A separation may then be measured as differences in the ability of light to transmit through the sample. A profile of the sample may be read every 10 seconds or so for approximately 400 seconds while the sample is subjected to the forces. An example rate of angular velocity may be approximately 4000 RPM (or 2167 x g). During the test, the sample may be held at approximately 10°C. The separation index of the sample may be measured from the meniscus to approximately 10 mm below (e.g., between 110 mm to 120 mm) using SEPVIEW 6 software. The index may indicate an amount of sample separated across the chosen sample area as a function of time, and may range from 0 (i.e., no separation) to 1 (i.e., complete separation). An index of 0.5 means that 50% of a sample has separated out at a certain time point across the sample area chosen.

Certain embodiments of the present disclosure may provide one or more advantages. For example, the systems and/or methods disclosed herein may provide almond-based food products having improved taste characteristics due to lower hexanal levels. The hexanal levels may be lowered in the almond-based food product due to the inclusion of almond skin extract in the composition, or the inclusion of almond skin extract and ascorbic acid together in the composition. Particular embodiments may provide some, none, or all of these operational benefits, and may provide additional operational benefits.

Although the present disclosure has been described with several embodiments, numerous changes, variations, alterations, transformations, and modifications may be suggested to one skilled in the art, and it is intended that the present disclosure encompass such changes, variations, alterations, transformations, and modifications as fall within the scope of the appended claims. The components of the systems and apparatuses disclosed herein may be integrated or separated. Moreover, the operations of the systems and apparatuses may be performed by more, fewer, or other components. The methods may include more, fewer, or other steps. Additionally, steps may be performed in any suitable order.

## Claims

1. A composition, comprising:
almond butter;
water; and
one or more hydrocolloids selected from the group consisting of:
gellan gum;
guar gum;
locust bean gum; and
xanthan gum;
one or more salts; and
lecithin;
**characterized in that** the composition further comprises almond skin extract.

2. The composition of Claim 1, wherein the almond skin extract comprises 35% polyphenols.

3. The composition of Claim 1 or 2, wherein the almond skin extract comprises less than 0.001% of the composition; and, optionally or preferably, wherein the almond skin extract comprises 0.0008% of the composition; and, optionally or preferably, wherein the almond skin extract comprises 0.0004% of the composition.

4. The composition of any preceding Claim further comprising ascorbic acid; and, optionally or preferably wherein the ascorbic acid comprises less than 0.020% of the composition; and, optionally or preferably, wherein the ascorbic acid comprises 0.015% of the composition.

5. A method, comprising:
adding water and almond butter to a mixer; and
adding an ingredient blend to the mixer, the ingredient blend comprising:
one or more hydrocolloids selected from the group consisting of:
gellan gum;
guar gum;
locust bean gum; and
xanthan gum;
one or more salts;
lecithin; and
mixing the ingredients, using the mixer, to yield a mixture having the ingredients dispersed evenly throughout; **characterized in that** the method further comprises adding almond skin extract to the mixer.

6. The method of Claim 5, wherein the almond skin extract comprises 35% polyphenols.

7. The method of Claim 5 or 6, further comprising adding ascorbic acid to the mixer.

8. The method of any of Claims 5, 6 or 7, further comprising:
injecting steam into the mixture; and
cooling the mixture.

9. The method of any of Claims 5 to 8, further comprising homogenizing the mixture.

10. The method of any of any of Claims 7 to 9, further comprising pasteurizing the mixture.

## Patentansprüche

1. Zusammensetzung, umfassend:
Mandelbutter;
Wasser; und
ein oder mehrere Hydrokolloide ausgewählt aus der Gruppe bestehend aus:
Gellangummi;
Guargummi;
Johannisbrotkernmehl; und
Xantangummi;
ein oder mehrere Salze; und
Lecithin;
**dadurch gekennzeichnet, dass** die Zusammensetzung ferner Mandelhautextrakt umfasst.

2. Zusammensetzung gemäß Anspruch 1, wobei der Mandelhautextrakt 35 % Polyphenole umfasst.

3. Zusammensetzung gemäß Anspruch 1 oder 2, wobei der Mandelhautextrakt weniger als 0,001 % der Zusammensetzung bildet; und wobei der Mandelhautextrakt gegebenenfalls oder vorzugsweise 0,0008 % der Zusammensetzung bildet; und wobei der Mandelhautextrakt gegebenenfalls oder vorzugsweise 0,0004 % der Zusammensetzung bildet.

4. Zusammensetzung gemäß einem der vorstehenden Ansprüche, ferner umfassend Ascorbinsäure; und wobei die Ascorbinsäure gegebenenfalls oder vorzugsweise weniger als 0,020 % der Zusammensetzung bildet; und wobei die Ascorbinsäure gegebenenfalls oder vorzugsweise 0,015 % der Zusammensetzung bildet.

5. Verfahren, umfassend:
Zugeben von Wasser und Mandelbutter in einen Mischer; und
Zugeben eines Gemischs von Inhaltsstoffen zu dem Mischer, wobei das Gemisch von Inhaltsstoffen umfasst:
ein oder mehrere Hydrokolloide ausgewählt aus der Gruppe bestehend aus:
Gellangummi;
Guargummi;
Johannisbrotkernmehl; und
Xantangummi;
ein oder mehrere Salze;
Lecithin; und
Mischen der Bestandteile unter Verwendung des Mischers, um ein Gemisch zu ergeben, in dem die Bestandteile gleichmäßig dispergiert sind; **dadurch gekennzeichnet, dass** das Verfahren ferner Zugeben von Mandelhautextrakt zu dem Mischer umfasst.

6. Verfahren gemäß Anspruch 5, wobei der Mandelhautextrakt 35 % Polyphenole umfasst.

7. Verfahren gemäß Anspruch 5 oder 6, ferner umfassend Zugeben von Ascorbinsäure zu dem Mischer.

8. Verfahren gemäß einem der Ansprüche 5, 6 oder 7, ferner umfassend:
Einspritzen von Dampf in das Gemisch; und
Kühlen des Gemischs.

9. Verfahren gemäß einem der Ansprüche 5 bis 8, ferner umfassend Homogenisieren des Gemischs.

10. Verfahren gemäß einem der Ansprüche 7 bis 9, ferner umfassend Pasteurisieren des Gemischs.

## Revendications

1. Composition, comprenant :
du beurre d'amande ;
de l'eau ; et
un ou plusieurs hydrocolloïdes choisis dans le groupe constitué par :
la gomme gellane ;
la gomme guar ;
la gomme de caroube ; et
la gomme xanthane ;
un ou plusieurs sels ; et
de la lécithine ;
**caractérisée en ce que** la composition comprend en outre un extrait de peau d'amande.

2. Composition selon la revendication 1, dans laquelle l'extrait de peau d'amande comprend 35% de polyphénols.

3. Composition selon la revendication 1 ou 2, dans laquelle l'extrait de peau d'amande constitue moins de 0,001% de la composition ; et éventuellement ou préférablement, où l'extrait de peau d'amande constitue 0,0008% de la composition ; et éventuellement ou préférablement, où l'extrait de peau d'amande constitue 0,0004% de la composition.

4. Composition selon l'une quelconque des revendications précédentes, comprenant en outre de l'acide ascorbique ; et éventuellement ou préférablement, où l'acide ascorbique constitue moins de 0,020% de la composition ; et éventuellement ou préférablement, où l'acide ascorbique constitue 0,015% de la composition.

5. Méthode, comprenant
l'addition d'eau et de beurre d'amande à un mélangeur ; et
l'addition d'un mélange d'ingrédients au mélangeur, le mélange d'ingrédients comprenant :
un ou plusieurs hydrocolloïdes choisis dans le groupe constitué par :
la gomme gellane ;
la gomme guar ;
la gomme de caroube ; et
la gomme xanthane ;
un ou plusieurs sels ;
de la lécithine ; et
le mélange des ingrédients, à l'aide du mélangeur, afin de conduire à un mélange comprenant les ingrédients dispersés de manière homogène dans l'ensemble de celui-ci ; **caractérisée en ce que** la méthode comprend en outre l'addition d'un extrait de peau d'amande au mélangeur.

6. Méthode selon la revendication 5, dans laquelle l'extrait de peau d'amande comprend 35% de polyphénols.

7. Méthode selon la revendication 5 ou 6, comprenant en outre l'addition d'acide ascorbique au mélangeur.

8. Méthode selon l'une quelconque des revendications 5, 6 ou 7, comprenant en outre
l'injection de vapeur dans le mélange ; et
le refroidissement du mélange.

9. Méthode selon l'une quelconque des revendications 5 à 8, comprenant en outre l'homogénéisation du mélange.

10. Méthode selon l'une quelconque des revendications 7 à 9, comprenant en outre la pasteurisation du mélange.
